# FASCICULE DE BREVET EUROPEEN

(11) **EP 0 836 803 B1**
(45) Date de publication et mention de la délivrance du brevet: **23.07.2003**
(21) Numéro de dépôt: 97402401.0
(22) Date de dépôt: 13.10.1997
(51) Int. Cl.: A01N 53/00

(54) **Composition désinfectante notamment adaptée au traitement des bâtiments d'élevage**
Desinfektionsmittel zur Behandlung von Tierställen
Disinfecting composition for treating animal accomodations

(30) Priorité: 16.10.1996 FR 9612616
(43) Date de publication de la demande: 22.04.1998
(73) Titulaire: Sogeval S.A., 53022 Laval Cedex 9 (FR)
(72) Inventeur: Daoudal, José, 53000 Laval (FR); Lucas, Frédéric, 53000 Laval (FR)
(74) Mandataire: Cabinet HERRBURGER

(56) Documents cités:
- WO-A-93/17558
- DE-A- 3 636 541
- FR-A- 2 502 010
- FR-A- 2 622 397
- GB-A- 2 205 748
- GB-A- 2 211 414

## Description

La présente invention concerne une composition désinfectante en solution aqueuse notamment adaptée au traitement des bâtiments d'élevage pendant les périodes dites de « vide sanitaire » qui séparent chaque lot d'animaux.

Il existe actuellement sur le marché de nombreuses compositions désinfectantes destinées à l'assainissement des locaux en élevage industriel.

Pour donner satisfaction, de telles compositions doivent, bien entendu, avoir une activité désinfectante marquée, c'est-à-dire une action bactéricide, virucide et fongicide ; elles doivent, en outre, être chimio ou biodégradables, et être non toxiques et peu corrosives.

Pour satisfaire à ces différents critères, on a déjà proposé, conformément à la publication FR-A-2 622 397, une composition contenant, en quantité pondérale, entre 3 et 35 % de sels d'ammonium quaternaire, entre 1 et 20 % de dialdéhyde à chaîne droite, notamment de glutaraldéhyde, et entre 1 et 15 % d'alcools gras éthoxylés.

Cette composition s'est révélée, à l'usage, particulièrement active, facilement éliminable et sans danger pour la santé humaine.

Les qualités bactéricides, virucides et fongicides des ammoniums quaternaires et du glutaraldéhyde sont bien connues depuis longtemps.

Dans la composition désinfectante susmentionnée, les alcools gras agissent en tant qu'agents mouillants et solubilisants susceptibles d'améliorer la « stabilité » de la solution et de permettre d'augmenter la proportion de produits actifs.

La combinaison de sels d'ammonium quaternaire de glutaraldéhyde et d'alcools gras éthoxylés permet donc d'obtenir, en solution aqueuse, des compositions désinfectantes très concentrées à spectre d'activité désinfectante très large et ayant, en particulier, une activité virucide très marquée du fait de l'excellente tensioactivité des ammoniums quaternaires.

A titre d'exemple, la composition suivante s'est avérée particulièrement active :

| | |
|---|---|
| Chlorure de didécyl diméthyl ammonium | 18,75 g |
| Chlorure de dioctyl diméthyl ammonium | 18,75 g |
| Chlorure d'octyl décyl diméthyl ammonium | 37,50 g |
| Chlorure d'alkyl (C14 50 % - C12 40 % - C16 10 %) diméthyl benzyl ammonium | 50 g |
| Glutaraldéhyde | 62,50 g |
| Terpinéol | 20 g |
| Essence de pin Alcool gras éthoxylés à 10 moles d'oxyde | 20 g |
| d'éthylène et 90 % de matières actives | 40 g |
| Colorant vert angélique (E 131 + E 104) | 1 g |
| Eau q.s.p. | 1 litre |

Malgré ses avantages certains, cette composition désinfectante présente l'inconvénient de n'avoir aucune action insecticide, et donc, de devoir être combinée à un traitement complémentaire à l'aide d'un produit insecticide pour obtenir une « démarche » sanitaire complète.

Or, ces opérations représentent une contrainte économique et matérielle (nombre d'opérations, exposition du personnel, allongement des périodes de « vide sanitaire » des locaux d'élevage, ...).

En conséquence, et malgré les recommandations des fabricants, les utilisateurs sont parfois tentés de mélanger au cours d'un même traitement des spécialités désinfectantes n'ayant pas d'action insecticide et des spécialités insecticides n'ayant aucun pouvoir bactéricide ou virucide. Les mélanges ainsi réalisés mettent cependant en présence des substances qui ne sont pas nécessairement compatibles entre elles et peuvent même être à l'origine d'accidents de type intoxication.

De plus, les études, qui permettent aux fabricants de déterminer l'efficacité de leur produit, ne tiennent pas compte systématiquement des interactions susceptibles d'apparaître lorsque ceux-ci sont associés à une autre spécialité et ne peuvent garantir que les produits ainsi mélangés conservent leur activité et leur stabilité chimique.

Par suite, il serait souhaitable de pouvoir disposer d'une spécialité polyvalente associant efficacement des propriétés désinfectantes (bactéricides, virucides et fongicides) et des propriétés insecticides.

Or, malgré ce besoin évident, il n'avait, jusqu'à présent, pas été possible de réunir les matières actives nécessaires sous une forme stable, miscible à l'eau et à des concentrations adaptées permettant d'obtenir l'efficacité indispensable pour une dose d'emploi unique.

Il est à noter que l'on a déjà proposé conformément aux documents GB-A-2 205 748, GB-A-2 211 414 et DE-36 36 541-A, des compositions désinfectantes destinées au traitement des bâtiments d'élevage. Toutefois, ces compositions désinfectantes n'ont aucune activité insecticide.

La présente invention a pour objet de combler la lacune susmentionnée en proposant d'utiliser pour le traitement des bâtiments d'élevage, une composition chimiquement stable tout en ayant une forte efficacité à la fois insecticide et bactéricide, virucide et fongicide, et parallèlement non toxique pour l'usage auquel elle est destinée et peu corrosive envers les matériaux exposés (notamment les métaux).

Conformément à l'invention, cette composition renferme, en proportions pondérales, entre 1 et 20 % de dialdéhydes, notamment de glutaraldéhyde, entre 3 et 35 % de sels, notamment de chlorures d'ammonium quaternaire, entre 1 et 15 % d'alcool gras éthoxylé et entre 0,5 et 15 % d'un agent insecticide choisi parmi les pyrèthrinoïdes de synthèse; c'est-à-dire les analogues de pyréthrine qui est un insecticide connu en lui-même constitué par des principes toxiques extraits des fleurs et des parties aériennes du pyrèthre (*Chrysanthemum Cineraria* Folium).

Cette composition est diluée dans l'eau à 2 % avant utilisation.

On s'est, en effet, rendu compte que, de manière surprenante, il était possible, à partir de la composition désinfectante connue susmentionnée objet du document FR-A-2 622 397 et en jouant sur la nature et les proportions des solvants et des tensioactifs utilisés, d'obtenir une composition polyvalente stable et efficace grâce à l'incorporation d'un agent insecticide particulier.

Conformément à l'invention, cet agent insecticide peut, avantageusement, être constitué par un isomère ou un mélange d'isomères de la perméthrine, en particulier un mélange d'environ 25 % d'isomère cis et d'environ 75 % d'isomère trans.

La perméthrine ou (1,RS)*cis,trans* (dichloro-2,2 vinyl) - 3 diméthyl-2,2 cyclopropane carboxylate de phénoxy-3 benzyle est un pyréthrinoïde à large spectre d'activité qui se distingue par une bonne persistance et dont l'efficacité permet d'assurer une protection insecticide lorsqu'on l'utilise à faible dose.

La composition utilisée conformément à l'invention peut avantageusement renfermer environ 20 g de pyrèthrinoïdes de synthèse et en particulier de perméthrine par litre de solution.

Il est à noter que conformément aux documents WO-93 17558-A et FR-A-2 502 010 on a déjà proposé de mettre en présence des aldéhydes et des pyréthrinoïdes de synthèse, mais cependant au sein de mélanges différents et pour des usages différents.

Selon une autre caractéristique de l'invention, la composition renferme entre 0,2 et 40 % d'extrait terpénique et notamment de terpinéol.

L'addition de terpinéol dans la composition utilisée conformément à l'invention est particulièrement avantageuse compte tenu du fait que ce composé, qui présente des qualités bactéricides notables, fait en même temps office de parfum.

A titre d'exemple, on peut mettre en oeuvre 100 g de terpinéol par litre de solution.

Selon une autre caractéristique de l'invention, la composition renferme essentiellement, par litre de solution, 60 g d'alcools gras éthoxylés, constitués par des composés éthoxylés à 11 moles d'oxyde d'éthylène et 45 % de matière active.

Ces alcools gras font office d'agents mouillants et solubilisants.

On peut, par ailleurs, avantageusement mettre en oeuvre en tant que sels d'ammonium quaternaire des sels largement similaires à ceux renfermés dans la composition désinfectante susmentionnée objet du document FR-A-2 622 397, à savoir des chlorures de dialkyl diméthyl ammonium et/ou des chlorures d'alkyl benzyl diméthyl ammonium dont les radicaux alkyl comportent entre 8 et 16 atomes de carbone.

Selon une autre caractéristique de l'invention, la composition renferme essentiellement, par litre de solution, 125 g de sel d'ammonium quaternaire constitué par un mélange de chlorure de didécyl diméthyl ammonium, de chlorure de dioctyl diméthyl ammonium, de chlorure d'octyl décyl diméthyl ammonium et de chlorures d'alkyl diméthyl benzyl ammonium, ces derniers étant constitués par un mélange d'environ 50 % en poids de composés en C14, 40 % en poids de composés en C12 et 10 % en poids de composés en C16.

Selon une autre caractéristique de l'invention, la composition renferme essentiellement 62,5 g de glutaraldéhyde par litre de solution.

La composition utilisée conformément à l'invention peut, bien entendu, renfermer des additifs autres, tels que par exemple un agent colorant, notamment un agent colorant de couleur verte.

L'invention concerne également une composition désinfectante en solution aqueuse notamment adaptée au traitement des bâtiments d'élevage, caractérisée en ce qu'elle renferme en proportions pondérales entre 1 et 20 % de mono ou de dialdéhydes, entre 3 et 35 % de chlorures de dialkyl diméthyl ammonium et/ou des chlorures d'alkyl benzyl diméthyl ammonium, les radicaux alkyl comportant entre 8 et 16 atomes de carbone, entre 1 et 15 % d'alcool gras éthoxylés constitués par des composés éthoxylés à 11 moles d'oxyde d'éthylène et 45 % de matières actives, et entre 0,5 et 15 % d'un agent insecticide choisi parmi les pyréthrinoïdes de synthèse, cette composition étant exempte de sels d'acides aliphatiques ou aromatiques hydroxylés.

A titre d'exemple, la composition suivante s'est révélée particulièrement avantageuse à l'usage :

| | |
|---|---|
| Chlorure de didécyl diméthyl ammonium | 18,75 g |
| Chlorure de dioctyl diméthyl ammonium | 18,75 g |
| Chlorure d'octyl décyl diméthyl ammonium | 37,50 g |
| Chlorure d'alkyl diméthyl benzyl ammonium (Alkyl : C14 50 % - C12 40 % - C16 10 %) | 50 g |
| Glutaraldéhyde | 62,50 g |
| Perméthrine (isomère cis/trans : 25 %/75 %) | 20 g |
| Alcool gras éthoxylés à 11 moles d'oxyde d'éthylène et 45 % de matières actives | 60 g |
| Terpinéol | 100 g |
| Colorant vert angélique (E131 - E104) | 0,020 g |
| Eau déminéralisée q.s.p. | 1 litre |

Les propriétés de la composition objet de l'invention ont pu être vérifiées par les tests expérimentaux décrits ci-dessous :

### 1) Efficacité insecticide

Deux tests ont été réalisés afin d'évaluer le pouvoir insecticide de la composition conforme à l'invention. La mise en oeuvre de tels tests s'est avérée indispensable compte tenu du fait que si les propriétés insecticides des pyrèthrinoïdes sont bien connues en elles-mêmes, il n'allait pas de soi qu'au sein de la composition, aucun antagoniste ou phénomène de « piège » des matières actives par les autres constituants ne risque de se produire.

### a) Essai mené en laboratoire

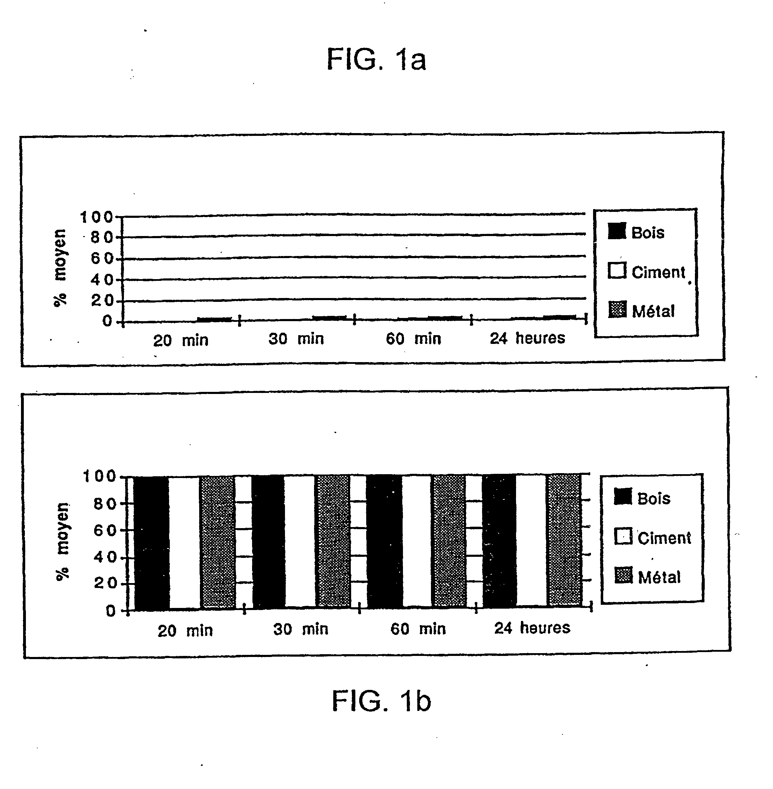

Ce test a été réalisé selon le *"Protocole expérimental destiné à établir, en laboratoire, l'efficacité d'une spécialité insecticide"* (Centre National d'Etudes Vétérinaires et Alimentaires) et a permis de vérifier l'efficacité d'un traitement avec la composition conforme à l'invention sur des surfaces de nature différentes (bois, ciment et métal). Les résultats, qui rendent compte des pourcentages de mortalité obtenus avec des mouches, sont rapportés sur la figure la (correspondant à la mortalité sans traitement) et sur la figure 1b (correspondant à la mortalité après traitement).

Dès les 20 premières minutes d'exposition, l'efficacité est optimale.

### b) Essais menés sur le terrain

Seules les conditions naturelles d'utilisation permettent d'évaluer la réelle efficacité d'un insecticide. En effet la rémanence du traitement est un critère de qualité important pour ce type de produit. Cette rémanence est influencée par la stabilité et la persistance de l'insecticide sur les surfaces dans la mesure où ce dernier agit par contact avec l'insecte. Or le contact avec l'insecte est lui même influencé par l'encrassement naturel des bâtiments d'élevage au cours du temps.

L'essai a été réalisé selon la méthode N°107 : *« Méthode d'essai d'efficacité pratique de produits insecticides destinés à lutter contre les mouches des étables dans les locaux d'élevages d'animaux domestiques »* établie par les membres de la Commission des Essais Biologiques de l'Association Nationale pour la Protection des Plantes. Réalisé en période estivale, l'essai a consisté à comparer les variations de la population de mouches dans des bâtiments d'élevage au cours des 3 mois qui suivent le traitement.

L'essai a été réalisé à la fois sur un bâtiment non traité, sur un bâtiment traité par la composition conforme à l'invention et sur un bâtiment traité par un insecticide connu servant ici de témoin positif.

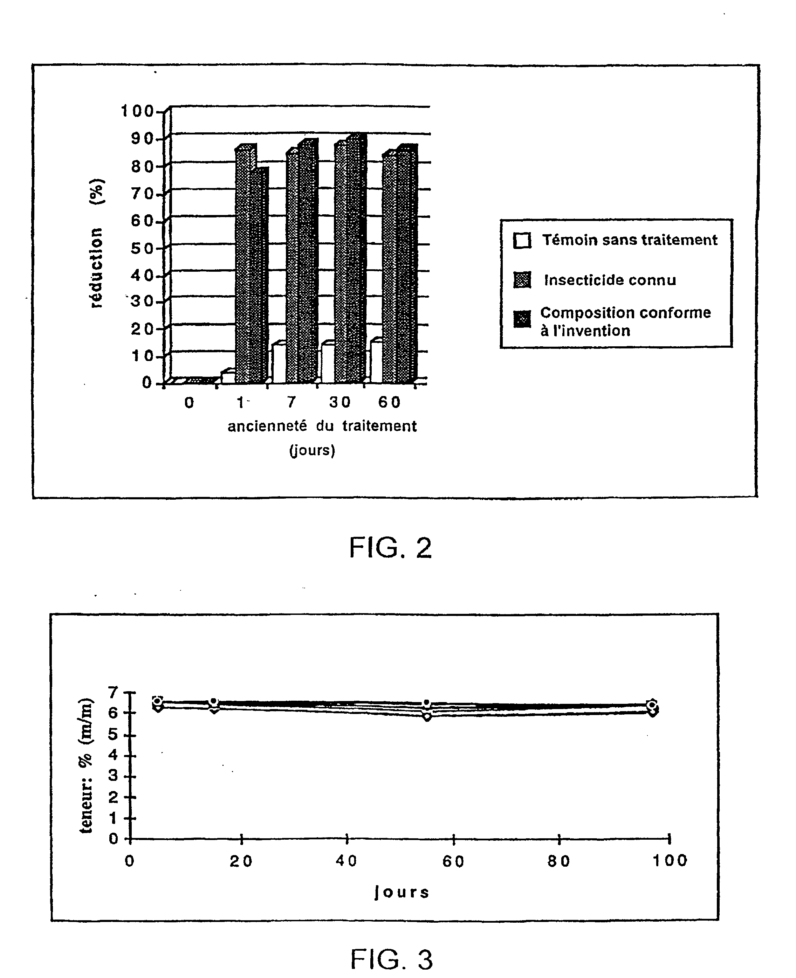

Les résultats obtenus sont rapportés sur la figure 2.

### Conclusion :

Ces résultats montrent que la composition conforme à l'invention est aussi efficace qu'un produit connu exclusivement insecticide.

### 2) Efficacité bactéricide et virucide

### a) Bactéricide

Des tests préliminaires ont permis de vérifier que les matières actives responsables de l'activité bactéricide conservent leur pouvoir. L'association synergique du mélange des ammoniums quaternaires et des aldéhydes propres à la composition désinfectante antérieure conforme au document FR-A-87 15 212 n'est pas inhibée au sein de la composition conforme à l'invention. Ce contrôle a été réalisé en comparant les CMB (concentrations minimales bactéricides) obtenues sur la souche Pseudomonas aeruginosa en présence d'eau dure à 30°f (méthode : par microplaques selon AFNOR NF T 72-170). Quatre variantes de la composition conforme à l'invention ont été testées (variations concernant les ratios de tensioactifs et co-solvants).

### Résultats :

Pour chaque essai (composition désinfectante antérieure comprise), les Concentrations Minimales Bactéricides sont obtenues pour des dilutions inférieures ou égales à 0,125 %.

### Conclusion :

L'efficacité bactéricide est maintenue vis à vis de la composition désinfectante antérieure qui est homologuée pour un usage à la dilution de 0,5 % sur la souche Pseudomonas, aeruginosa ; l'emploi de la composition conforme à l'invention est prévu pour une dilution de 2 %.

### b) Virucidie

L'essai préliminaire a été réalisé par microméthode sur le virus de la maladie de Talfan (Picornaevirus de type 1), bien connu pour sa résistance aux désinfectants et qui constitue pour cette raison le facteur limitant de la dilution d'emploi.

### Résultats :

La composition conforme à l'invention, diluée à 2 %, permet d'obtenir une chute d'au moins 3 Log du titre viral, conformément aux exigences du Laboratoire des Médicaments Vétérinaires en matière de désinfectant à usage agricole.

### 3) Stabilité chimique

L'étude de stabilité de la composition comprend le contrôle de l'aspect du produit, la mesure du pH et le dosage des matières actives. L'étude est réalisée sur des échantillons stockés dans des flacons en polypropylène, en étuve à 37°C, afin d'avoir un profil de vieillissement accéléré.

Les données ci-dessous correspondent à des lots qui ont été stockés à 37°C pendant plus de 3 mois.

### a) Aspect des échantillons

Absence de précipités
Pas de déphasage des constituants Coloration stable.

Soit un aspect inchangé après 3 mois à 37°C.

### b) Stabilité des aldéhydes

La stabilité à 37°C des aldéhydes est représentée sur la figure 3.

Pas de dégradation significative après 99 jours à 37°C.

### c) Stabilité des ammoniums quaternaires

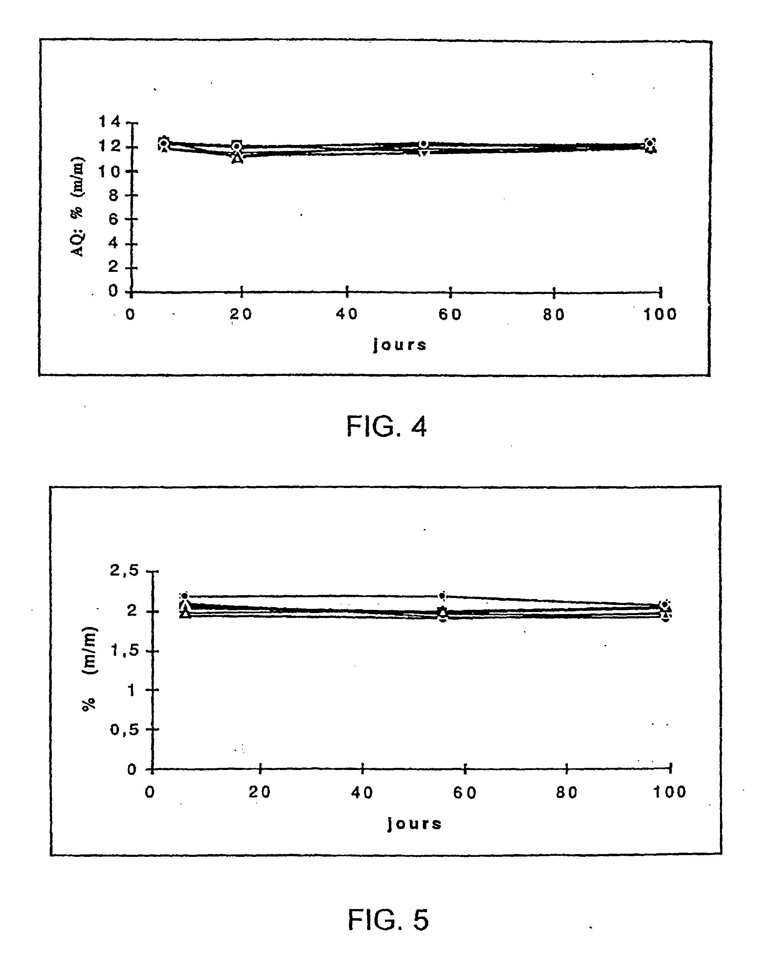

La stabilité à 37°C des ammoniums quaternaires est représentée sur la figure 4.

Pas de dégradation significative après 99 jours à 37°C.

### d) Stabilité de la perméthrine

La stabilité à 37°C de la perméthrine est représentée sur la figure 5.

Pas de dégradation significative après 99 jours à 37°C.

### e) Variations du pH

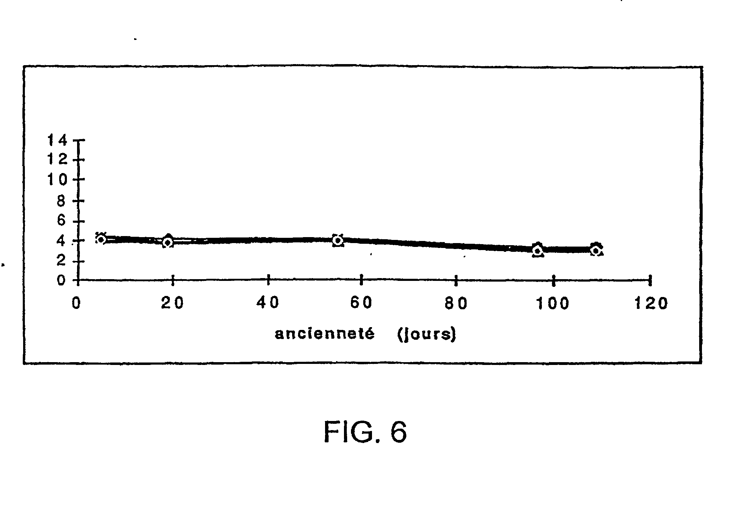

L'évolution du pH à 37°C est représentée sur la figure 6.

Le pH diminue légèrement après deux mois.

### f) Commentaires

Les graphiques ci-dessus correspondent aux résultats des dosages effectués sur six lots différents de la composition conforme à l'invention. Ces lots comportent entre eux quelques variations concernant les pourcentages d'excipients.

On peut noter que les matières actives résistent de façon satisfaisante aux conditions de vieillissement à 37°C pendant au moins trois mois.

### 4) Aspect toxicologique

Les différents constituants de la composition conforme à l'invention ne présentent pas de danger particulier à la dose d'emploi prévue (2 % en dilution aqueuse).

### 5) Corrosivité de la composition

Aux doses d'emploi, la composition ne présente pas de risque particulier envers les matériaux exposés aux traitements.

## Revendications

1. Utilisation pour le traitement de bâtiments d'élevage en particulier pendant les périodes dites de « vide sanitaire » qui séparent chaque lot d'animaux d'une composition désinfectante en solution aqueuse renfermant en proportions pondérales entre 1 et 20 % de dialdéhydes, entre 3 et 35 % de sels d'ammonium quaternaire, entre 1 et 15 % d'alcools gras éthoxylés, et entre 0,5 et 15 % d'un agent insecticide choisi parmi les pyréthrinoïdes de synthèse cette composition étant diluée dans l'eau, à 2 %, avant utilisation.

2. Utilisation selon la revendication 1,
**caractérisée en ce que**
l'agent insecticide est constitué par un isomère ou un mélange d'isomères de la perméthrine.

3. Utilisation selon la revendication 2,
**caractérisée en ce que**
l'agent insecticide renferme environ 25 % d'isomère cis et 75 % d'isomère trans.

4. Utilisation selon l'une quelconque des revendications 1 à 3,
**caractérisée en ce que**
la composition désinfectante renferme entre 0,2 et 40 % d'extrait terpénique.

5. Utilisation selon l'une quelconque des revendications 1 à 4,
**caractérisée en ce que**
les sels d'ammonium quaternaire sont des chlorures de dialkyl diméthyl ammonium et/ou des chlorures d'alkyl benzyl diméthyl ammonium, les radicaux alkyl comportant entre 8 et 16 atomes de carbone.

6. Utilisation selon la revendication 5,
**caractérisée en ce que**
la composition désinfectante renferme par litre de solution, 125 g de sel d'ammonium quaternaire constitué par un mélange de chlorure de didécyl diméthyl ammonium, de chlorure de dioctyl diméthyl ammonium, de chlorure d'octyl décyl diméthyl ammonium et de chlorures d'alkyl diméthyl benzyl ammonium, ces derniers étant constitués par un mélange renfermant 50 % en poids de composés en C₁₄, 40 % en poids de composés en C₁₂ et 10 % en poids de composés en C₁₆.

7. Utilisation selon l'une quelconque des revendications 1 à 6,
**caractérisée en ce que**
la composition désinfectante renferme 62,5 g de glutaraldéhyde par litre de solution.

8. Utilisation selon l'une quelconque des revendications 1 à 7,
**caractérisée en ce que**
la composition désinfectante renferme 20 g de pyréthrinoïdes de synthèse par litre de solution.

9. Utilisation selon l'une quelconque des revendications 1 à 8,
**caractérisée en ce que**
la composition renferme, par litre de solution, 60 g d'alcools gras éthoxylés constitués par des composés éthoxylés à 11 moles d'oxyde d'éthylène et 45 % de matière active.

10. Utilisation selon l'une quelconque des revendications 1 à 9,
**caractérisée en ce qu'**
elle renferme 100 g de terpinéol par litre de solution.

11. Composition désinfectante en solution aqueuse notamment adaptée au traitement des bâtiments d'élevage,
**caractérisée en ce qu'**
elle renferme en proportions pondérales entre 1 et 20 % de mono ou de dialdéhydes, entre 3 et 35 % de chlorures de dialkyl diméthyl ammonium et/ou des chlorures d'alkyl benzyl diméthyl ammonium, les radicaux alkyl comportant entre 8 et 16 atomes de carbone, entre 1 et 15 % d'alcool gras éthoxylés constitués par des composés éthoxylés à 11 moles d'oxyde d'éthylène et 45 % de matières actives, et entre 0,5 et 15 % d'un agent insecticide choisi parmi les pyréthrinoïdes de synthèse, cette composition étant exempte de sels d'acides aliphatiques ou aromatiques hydroxylés.

## Patentansprüche

1. Verwendung einer desinfizierenden Zusammensetzung in wässriger Lösung, die in Gewichtsanteilen zwischen 1 und 20 % Dialdehyde, zwischen 3 und 35 % quaternäre Ammoniumsalze, zwischen 1 und 15 % ethoxylierte Fettalkohole und zwischen 0,5 und 15 % eines insektiziden Mittels, das unter den synthetischen Pyrethrinoiden ausgewählt ist enthält, wobei diese Zusammensetzung vor Anwendung in Wasser mit 2 % gelöst ist, zur Behandlung von Gebäuden für die Tierhaltung, insbesondere während der als "Sanitärleere" bezeichneten Zeiträume, die jede Charge von Tieren von einer anderen trennen.

2. Verwendung nach Anspruch 1, **dadurch gekennzeichnet, dass** das insektizide Mittel durch ein Isomer oder ein Gemisch von Isomeren des Permethrins gebildet ist.

3. Verwendung nach Anspruch 2, **dadurch gekennzeichnet, dass** das insektizide Mittel ca. 25 % Cis-Isomer und 75 % Trans-Isomer enthält.

4. Verwendung nach einem beliebigen der Ansprüche 1 bis 3, **dadurch gekennzeichnet, dass** die desinfizierende Zusammensetzung zwischen 0,2 und 40 % Terpenextrakt enthält.

5. Verwendung nach einem beliebigen der Ansprüche 1 bis 4, **dadurch gekennzeichnet, dass** die quaternären Ammoniumsalze Dialkyldimethylammoniumchloride und/oder Alkylbenzyldimethylammoniumchloride sind, wobei die Alkylradikale zwischen 8 und 16 Kohlenstoffatomen aufweisen.

6. Verwendung nach Anspruch 5, **dadurch gekennzeichnet, dass** die desinfizierende Zusammensetzung pro Liter Lösung 125 g quaternäres Ammoniumsalz enthält, das gebildet ist durch ein Gemisch von die Didekyldimethylammoniumchlorid, Dioctyldimethylammoniumchlorid, Oktyldimethylammoniumchlorid und Alkyldimethylbenzylammoniumchloriden, wobei letztere aus einem Gemisch bestehen, das 50 Gewichtsprozent C₁₄-Verbindungen, 40 Gewichtsprozent C₁₂-Verbindungen und 10 Gewichtsprozent C₁₆-Verbindungen enthält.

7. Verwendung nach einem beliebigen der Ansprüche 1 bis 6, **dadurch gekennzeichnet, dass** die desinfizierende Zusammensetzung 62,5 g Glutaraldehyd pro Liter Lösung enthält.

8. Verwendung nach einem beliebigen der Ansprüche 1 bis 7, **dadurch gekennzeichnet, dass** die desinfizierende Zusammensetzung 20 g Synthese-Pyrethrinoide pro Liter Lösung enthält.

9. Verwendung nach einem beliebigen der Ansprüche 1 bis 8, **dadurch gekennzeichnet, dass** die Zusammensetzung pro Liter Lösung 60 g ethoxylierte Fettalkohole enthält, die aus ethoxylierten Verbindungen mit 11 mol Ethylenoxid und 45 % aktivem Material bestehen.

10. Verwendung nach einem beliebigen der Ansprüche 1 bis 9, **dadurch gekennzeichnet, dass** sie 100 g Terpineol pro Liter Lösung enthält.

11. Desinfizierende Zusammensetzung in wässriger Lösung, insbesondere für die Behandlung von Gebäuden für die Tierhaltung, **dadurch gekennzeichnet, dass** sie in Gewichtsanteilen zwischen 1 und 20 % Mono- oder Dialdehyde, zwischen 3 und 35 % Dialkyldimethylammoniumchloride und/oder Alkylbenzyldimethylammoniumchloride, wobei die Alkylradikale zwischen 8 und 16 Kohlenstoffatomen enthalten, zwischen 1 und 15 % ethoxylierte Fettalkohole, bestehend aus ethoxylierten Verbindungen mit 11 mol Ethylenoxid und 45 % aktiven Materialien und zwischen 0,5 und 15 % eines Insektizids enthält, das unter den Synthese-Pyrethrinoiden ausgewählt ist, wobei die Zusammensetzung frei von Fettsäuren oder hydroxylierten Aromaten ist.

## Claims

1. Use for the treatment of livestock buildings, especially during the so-called "cleanout" periods which separate each group of animals, of a disinfecting composition in aqueous solution comprising, in proportions by weight, from 1 to 20% of dialdehydes, from 3 to 35% of quaternary ammonium salts, from 1 to 15% of ethoxylated fatty alcohols and from 0.5 to 15% of an insecticidal agent selected from synthetic pyrethrinoids, this composition being diluted in water, to 2%, before use.

2. Use according to claim 1, **characterised in that** the insecticidal agent is constituted by an isomer or a mixture of isomers of permethrin.

3. Use according to claim 2, **characterised in that** the insecticidal agent comprises approximately 25% of cis isomer and 75% of trans isomer.

4. Use according to any one of claims 1 to 3, **characterised in that** the disinfecting composition comprises from 0.2 to 40% of terpene extract.

5. Use according to any one of claims 1 to 4, **characterised in that** the quaternary ammonium salts are dialkyldimethylammonium chlorides and/or alkylbenzyldimethylammonium chlorides, the alkyl radicals comprising from 8 to 16 carbon atoms.

6. Use according to claim 5, **characterised in that** the disinfecting composition comprises, per litre of solution, 125 g of quaternary ammonium salt constituted by a mixture of didecyldimethylammonium chloride, dioctyldimethylammonium chloride, octyldecyldimethylammonium chloride and alkyldimethylbenzylammonium chlorides, the latter being constituted by a mixture comprising 50% by weight of C₁₄ compounds, 40% by weight of C₁₂ compounds and 10% by weight of C₁₆ compounds.

7. Use according to any one of claims 1 to 6, **characterised in that** the disinfecting composition comprises 62.5 g of glutaraldehyde per litre of solution.

8. Use according to any one of claims 1 to 7, **characterised in that** the disinfecting composition comprises 20 g of synthetic pyrethrinoids per litre of solution.

9. Use according to any one of claims 1 to 8, **characterised in that** the composition comprises, per litre of solution, 60 g of ethoxylated fatty alcohols, constituted by ethoxylated compounds having 11 moles of ethylene oxide, and 45% of active substance.

10. Use according to any one of claims 1 to 9, **characterised in that** it comprises 100 g of terpineol per litre of solution.

11. Disinfecting composition in aqueous solution, especially suitable for the treatment of livestock buildings, **characterised in that** it comprises, in proportions by weight, from 1 to 20% of monoaldehydes or dialdehydes, from 3 to 35% of dialkyldimethylammonium chlorides and/or alkylbenzyldimethylammonium chlorides, the alkyl radicals comprising from 8 to 16 carbon atoms, from 1 to 15% of ethoxylated fatty alcohols constituted by ethoxylated compounds having 11 moles of ethylene oxide and 45% of active substances, and from 0.5 to 15% of an insecticidal agent selected from synthetic pyrethrinoids, the composition being free from salts of hydroxylated aliphatic or aromatic acids.
